# EUROPEAN PATENT SPECIFICATION

(11) **EP 3 515 032 B1**
(45) Date of publication and mention of the grant of the patent: **15.09.2021**
(21) Application number: 17850317.3
(22) Date of filing: 18.09.2017
(51) Int. Cl.: H04L 29/06, H04L 12/18, H04N 7/15

(54) **PORT MULTIPLEXING METHOD AND SERVER IN VIDEO CONFERENCE SYSTEM AND COMPUTER STORAGE MEDIUM**
PORTMULTIPLEXIERUNGSVERFAHREN UND SERVER IN EINEM VIDEOKONFERENZSYSTEM UND COMPUTERSPEICHERMEDIUM
PROCÉDÉ ET SERVEUR DE MULTIPLEXAGE DE PORT DANS UN SYSTÈME DE VIDÉOCONFÉRENCE, ET SUPPORT DE STOCKAGE INFORMATIQUE

(30) Priority: 18.09.2016 CN 201610828557
(43) Date of publication of application: 24.07.2019
(73) Proprietor: ZTE Corporation, Shenzhen, Guangdong 518057 (CN)
(72) Inventor: SU, Dafeng, Shenzhen Guangdong 518057 (CN)
(74) Representative: Iannone, Carlo Luigi
(86) International application number: PCT/CN2017/102111
(87) International publication number: WO 2018/050116

(56) References cited:
- CN-A- 1 921 403
- CN-A- 101 986 696
- CN-A- 102 868 837
- CN-A- 103 457 746
- JP-A- 2003 259 323
- US-A1- 2005 076 128
- US-A1- 2012 163 577
- US-A1- 2015 288 925

## Description

### Technical Field

The present invention relates to the technical field of communications, and in particular to a port multiplexing method and server in a video conference system and a computer storage medium.

### Background

Port multiplexing is that in a process of establishing a multimedia session, a video conference server provides a certain or many fixed ports, and sends/receives, on these ports, audio-video media streams to/from each terminal participating in a conference, thereby finally implementing a video conference service function, and reducing the complexity of project implementation on the site.

At present, the common port multiplexing solution is that the video conference server receives/sends, by opening a port address range, different media code streams of different terminals at different ports. However, the solution will cause a network device of a client to open more ports, which causes security risks, increases the complexity of implementing a system project, and increases the cost.

The port multiplexing solution of the traditional video conference system H.323 adopts the protocol H.460. The video conference system provides several fixed signaling ports like registration, call and conference control. All the terminals are registered on the designated ports of the video conference server, establish call connections, and establish conference control connections. At the same time, a media port is designated. In a signaling interaction process, the video conference server allocates a multiplexing ID for the connected terminal, the terminal device sending the media stream fills the multiplexing ID in a header field part of a Real-time Transport Protocol (RTP) packet, and the terminal device accepting the media stream differentiates the terminal or the media stream corresponding to the terminal according to the multiplexing ID, which replaces a function, in the traditional solution, of determining the terminal and the media stream corresponding to the terminal through an IP port.

In the conventional art, a Session Initiation Protocol (SIP) protocol of a SIP video conference system developing based on the Internet defines the signaling ports for terminal registration, call and conference control, which implements the port multiplexing of the signaling part. However, the media part is not considered, and there is no a unified solution at present. So, there is a problem of multiple ports on an enterprise network site, which causes security risks.

US 2005/076128A1 discloses "a method to allow voice, video and data conference with minimum bandwidth consumption between two or more geological locations and achieve and achieve quality of service (QoS) and scalability". US 2015/288925A1 discloses "a method and system for supporting videoconference in distributed telepresence platform".

### Summary

Embodiments of the present invention provide a port multiplexing method and server in a video conference system, for solving a problem in the conventional art of multiple ports, high security risks and high deploying complexity, and high cost in a video conference system because a port of a transmission media in the video conference system is not multiplexed.

A first aspect of the present invention provides a port multiplexing method in a video conference system, according to independent claim 1, which includes the following steps:
a first connection initiated by a terminal is accepted;
a registration message sent by the terminal through the first connection is received, and after being converted into a format which can be identified by a video conference server, the registration message is sent to the corresponding video conference server, so that the video conference server completes the registration of the terminal according to the registration message;
a participation invitation message sent by an inviting party is received and converted, and the converted participation invitation message is sent to a responding party, so that the responding party responds to the participation invitation message, and establishes a session with the inviting party. The inviting party is the terminal or the video conference server, and the responding party is the video conference server or the terminal;
at least one of other connections initiated by the terminal is accepted;
various types of media streams sent by the terminal through the at least one connection are received, and after being converted into the format which can be identified by the video conference server, the various types of media streams are sent to the video conference server.

A second aspect of the present invention also provides a server, according to independent claim 6, which includes:
a receiving module, a processing module, and a sending module.

The receiving module is configured to accept the first connection initiated by the terminal, receive the registration message sent by the terminal through the first connection, receive and convert the participation invitation message sent by the inviting party, herein the inviting party is one of the terminal or the video conference server corresponding to the terminal, accept at least one of other connections initiated by the terminal, and receive the various types of media streams sent by the terminal through at least one of other connections.

The processing module is configured to convert the registration message sent by the terminal into the format which can be identified by the video conference server, convert the participation invitation message, and convert the various types of media streams sent by the terminal through at least one of other connections into the format which can be identified by the video conference server.

The sending module is configured to send the converted registration message to the corresponding video conference server, so that the video conference server completes the registration of the terminal according to the registration message, send the converted participation invitation message to the responding party which is another of the terminal or the video conference server corresponding to the terminal, so that the responding party responds to the participation invitation message, and establishes the session with the inviting party, and send the converted various types of media streams to the video conference server.

A third aspect of the present invention also provides a computer storage medium, according to independent claim 11, in which one or more programs that a computer may execute are stored. When executed by the computer, the one or more programs make the computer perform the above method.
Further embodiments are set out in the dependent claims.

According to a port multiplexing method and server in a video conference system provided by the embodiments of the present invention, a first connection initiated by a terminal is accepted by servers provided at the terminal and a video conference server; a registration message sent by the terminal by means of the first connection is received, and the registration message is forwarded to the corresponding video conference server, so as to register the terminal on the video conference server; a participation invitation message sent by one of the terminal or the video conference server is then received and forwarded to the other party, so as to establish a session between the terminal and the video conference server; at least one connection initiated by the terminal is then accepted, and various types of media streams sent by the terminal through the at least one connection are received and converted and then forwarded to the video conference server, so as to implement a video conference. By means of the present invention, an effect of providing a port to a terminal by a video conference server is achieved, the complexity of deploying a video conference system is reduced, some of security risks are reduced, and user experience is improved.

### Brief Description of the Drawings

Fig. 1 is a flowchart of a port multiplexing method in a video conference system provided by the first embodiment of the present invention.
Fig. 2 is a flowchart of a port multiplexing method in another video conference system provided by the second embodiment of the present invention.
Fig. 3 is a module diagram of a server provided by the third embodiment of the present invention.
Fig. 4 is the structure of the special signaling according to an embodiment of the present invention.

### Detailed Description of the Embodiments

The present invention is further elaborated below through specific embodiments in combination with the accompanying drawings.

### Embodiment one

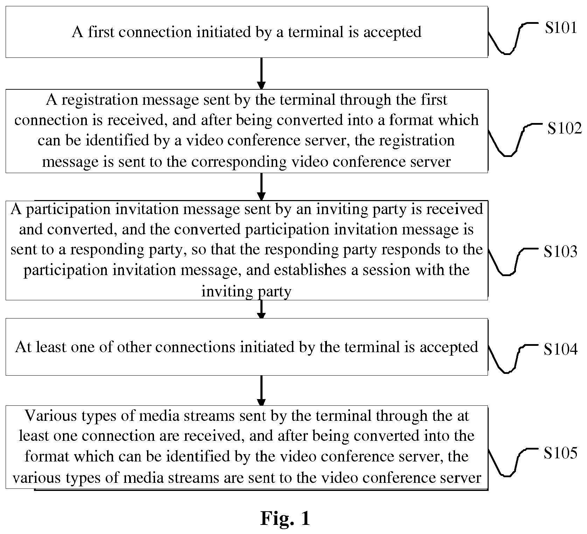

With reference to Fig. 1, the present embodiment provides a port multiplexing method in a video conference system, through which transmission of signaling and media stream may be performed between a video server and a terminal. For the terminal, it establishes a first connection with the server, registers to a video conference server through the server, and then implements a process of establishing a session with the video conference server through the first connection established with the sever; after that, the server receives other connections established by the terminal, receives various media streams sent by the terminal through various connections after the connection is established, and forwards the received various media streams to the video conference server after converting them into the format which can be identified by the video conference server. Thereby, in the present embodiment, the video conference server is equivalent to providing a port to the terminal, and then, when the video conference system is implemented, the difficulty and cost of implementation may be reduced. The port multiplexing method in a video conference system provided by the present embodiment includes the following steps.

At S101, a first connection initiated by a terminal is accepted.

At S102, a registration message sent by the terminal through the first connection is received, and after being converted into a format which can be identified by a video conference server, the registration message is sent to the corresponding video conference server, so that the video conference server completes the registration of the terminal according to the registration message.

At S103, a participation invitation message sent by an inviting party is received and converted, and the converted participation invitation message is sent to a responding party, so that the responding party responds to the participation invitation message, and establishes a session with the inviting party. The inviting party is the terminal or the video conference server, and the responding party is the video conference server or the terminal.

At S104, at least one of other connections initiated by the terminal is accepted.

At S105, various types of media streams sent by the terminal through the at least one connection are received, and after being converted into the format which can be identified by the video conference server, the various types of media streams are sent to the video conference server.

In the present embodiment, the terminal is an electronic device with a video and audio acquiring function, including, but not limited to, a mobile phone, a computer, and a tablet PC. At S101, the first connection is initiated to establish a session between the terminal and the video conference server.

In an embodiment, all the connections including the first connection initiated by the terminal belong to websocket connections. The connection initiated by the terminal each time is initiated based on adopting a websocket protocol. All the above steps S101-S105 may be implemented by a logical device, namely a server. The server also uses the websocket protocol to provide a port to the terminal, and establishes each websocket connection with the terminal.

At S101, the terminal may initiate the first connection by means of sending a connection request, and the server receives the connection request and gives a response, so as to complete the process of accepting the first connection request. After the connection is accepted, a bidirectional channel is established between the terminal and the server, and information may be transmitted bi-directionally through the first connection. In the present embodiment, information transmitted on the first connection is for implementing session establishment between the terminal and the video conference server and other functions. After the first connection is established, the terminal may send the registration message to the server through the first connection. At the server side, S102 may be performed. It is understandable that the process of establishing the session is generally implemented based on an SIP, so in S102 and S103, data is transmitted between the terminal and the server through the first connection based on the SIP. So, for the terminal, the registration message is packed according to the original SIP method; for the server, it is needed to parse the packed registration message, determine a source end, namely the terminal sending the message, and a destination end, namely the corresponding video conference server, and process the registration message into an SIP message which can be identified by the video conference server and send it to the video conference server. It is understandable that a connection also needs to be established between the server and the video conference server to transmit the registration message and other information. Transmission of data to the video conference server may be implemented based on a Real Time Protocol/Real Time Control Protocol (RTP/RTCP).

In an embodiment, there are generally multiple terminals establishing multiple connections on the server, so in S102, not only the registration message sent through the first connection is received, messages sent by other terminals through other connections may also be received. In order to make the data, which is sent by the terminal through the connection, correspond to the terminal correctly, information which may determine a corresponding relationship between the connection and the terminal is needed. The information is best written in corresponding sent information by the terminal during sending information through the connection. The information may be identity information of the terminal, including, but not limited to, a terminal number, an International Mobile Equipment Identity (IMEI) number of the terminal, an IP address, and so on. For example, the terminal establishes three connections with the server, and may respectively write its own terminal number in the data sent on the three connections; after receiving the data, the server determines the terminal corresponding to each connection according to the terminal number carried in the data, saves the corresponding relationship, and when needed, uses the corresponding relationship to determine the terminal corresponding to the connection.

In an embodiment, if the corresponding relationship between the connection and the terminal is determined by means of writing the identity information of the terminal in the information transmitted through the connection, the server needs to parse the information to analyze the identity information of the terminal. Analyzing the identity information of the terminal from the complex information will undoubtedly increase the workload of analyzing the server and increase the load of the server, therefore, the terminal may preferably send special signaling to the server through the established connection after the server accepts the connection. The special signaling may be used for setting the identity information of the terminal corresponding to the connection for transmitting the special signaling. That is, after the first connection is accepted in S101, it is possible to receive the special signaling sent by the terminal through the first connection, set the corresponding relationship between the first connection and the terminal according to the special signaling, and save the corresponding relationship.

After S102, the video conference server receives the registration message. It is understandable that after S101, the identity information of the terminal needed for registration must be included in the registration message, so that the video conference server may differentiate the different terminals. So, after the terminal is registered, the identity information of the terminal exists on the video conference server.

At S103, the session between the terminal and the video conference server may be established. In the present embodiment, there are two manners of establishing the session between the terminal and the video conference server, one of which is a session establishing method in an uplink call process actively initiated by the video conference server, and the other is a session establishing method in a downlink call process actively initiated by the terminal.

The process of the first manner includes the following operations.
1. The participation invitation message sent by the video conference server is received, herein the participation invitation message is used for inviting the corresponding terminal. It is foreseeable that the participation invitation message carries the identity information of an invited object. In consideration that after the special signaling transmitted through each connection is received, the corresponding relationship between each connection and the identity information of the terminal can be determined, the object to which the participation invitation message needs to be sent and transmission is performed through which established connection can be determined according to the identity information of the terminal and the corresponding relationship between each connection and the identity information of the terminal in the participation invitation message.
2. According to the identity information of the terminal corresponding to the first connection, the participation invitation message is sent to the terminal through the first connection, so that the terminal gives a response, establishes the session, and completes a media capability negotiation between the terminal and the video conference server.

The process of the second manner includes the following operations.
1. The participation invitation message sent by the terminal is received. The participation invitation message may carry the identity information of the video conference server, so as to determine, according to the identity information, the destination end to which the participation invitation message is forwarded.
2. The participation invitation message is processed into an SIP message, and it (the processed SIP message) is forwarded to the video conference server according to a corresponding routing rule (a SIP routing rule), so that the video conference server gives a response, establishes the session, and completes the media capability negotiation between the terminal and the video conference server.

In the above process, a call session is established. In the process of establishing the session, the terminal and the video server perform the media capability negotiation, and negotiate, through an intermediate forwarding function, audio-video formats, audio-video coding and decoding algorithms, bandwidth parameters and other media capabilities.

After the call session is established, it is also needed to initiate multiple connections to the server to transmit different types of media streams, so in S104 of the present embodiment, it is needed to accept at least one connection initiated by the terminal. The connection belongs to the websocket connection. The number of the connections initiated by the terminal generally corresponds to the number of the types of the media streams (an audio media stream, a video media stream, and a second video media stream) that the terminal needs to send; for example, the terminal needs to send an audio media stream and a video media stream, then in S104, what is accepted is two connections initiated by the terminal. In S105, the video media stream and the audio media stream, which are respectively sent by the terminal through the two connections established in S104, are received.

In an embodiment, after media stream data sent by the terminal side is received, in order to make the video conference server available, it is also needed to convert the received media stream data according to a protocol. In consideration that the general server and the video conference server use the RTP/RTCP, in the present embodiment, the operation of converting each media stream into the format which can be identified by the video conference server in S105 includes that: the media stream data is processed into the data satisfying the format of the RTP/RTCP.

In the present embodiment, a difference conversion between signaling data at the terminal side and signaling data at the video conference server side is completed. In a media session process, a difference conversion between media data at the terminal side and media data at the video conference server side is completed. In the process of converting the media stream data, because there are the video media stream, the audio media stream and other types, it is needed to unpack to analyze the received media stream, and then repack it. Unpacking to analyze each media stream to determine the type of the media stream will undoubtedly increase the complexity of the process of unpacking to analyze.

In order to reduce the process of unpacking to analyze the data before the server forwards the media stream data of the terminal, it is needed to determine the type of the media stream data transmitted through each connection. In view of this, the present embodiment may use the special signaling to set the data type carried by each connection. Specifically, the data type carried by the connection for transmitting the special signaling may be written in the special signaling. For example, the data type is written in the special signaling transmitted through the first connection as signaling data, and the data type is written in the special signaling corresponding to the connection for transmitting the audio media stream as the audio media stream data.

In an embodiment, the special signaling includes two fields defined outside a protocol standard header. The two fields are respectively used for describing the terminal number of the corresponding connection and the data type carried by the corresponding connection.

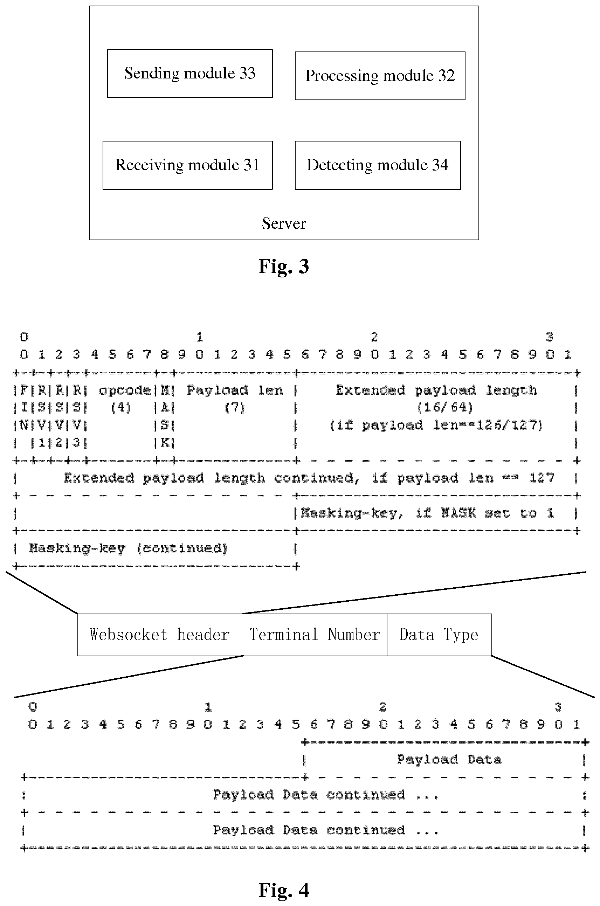

The structure of the special signaling is as illustrated in figure 4.

So, the special signaling of the present embodiment may also be used for setting the data type carried by the connection for transmitting the signaling. It is foreseeable that the terminal needs to transmit how many types of the media streams, how many connections are needed. That is, in S104, the number of the other connections is determined by the number of the types of the media streams to be sent by the terminal.

In an embodiment, the server is a logical device, and may be set with the device of the video conference server or separately when network construction or productization is applied actually. The present embodiment does not limit the specific form of the server.

In the present embodiment, the server may only implement port multiplexing of a signaling layer or multiplexing of a real time signaling media port according to product requirements according to product requirement definitions, which is not limited by the present invention.

In the present embodiment, teardown of the connection and logout of the session may be initiated by the terminal, or detected and implemented by the server.

The method of initiating by the terminal includes that: a request for logging out the session which is sent by the terminal through the first connection is received, then, the connection which has been established with the terminal is teared down, and the video conference server is controlled to log out the session of the terminal. If there are multiple sessions established by the terminal, the correct session is logged out according to session information carried in the request for logging out the session.

The method of tearing down by the server includes that: it is determined, through a connection heartbeat check, whether the terminal needs to tear down the established connection; if so, the connection of the terminal is teared down, at the same time, the account of the terminal is logged out on the video conference server. The connection heartbeat check may help to determine whether the connection is abnormal, and determine, when the connection is abnormal (for example, no data is transmitted for a long time), that the connection needs to be teared down.

By using the present embodiment, different connections are established with the terminal, the data sent by the terminal through each connection is received and forwarded to the corresponding video conference server. In the present embodiment, the video conference server is equivalent to providing a service to the terminal through a port, an effect of providing a multiplexing port outside by the video conference server is achieved, the complexity of deploying the video conference system is reduced efficiently, the problem of firewall and Network Address Translation (NAT) traversal on the site is solved, and the problem of signaling packet loss on the Internet is avoided, thereby the method of the present embodiment has stronger comprehensive competitiveness.

### Example case.

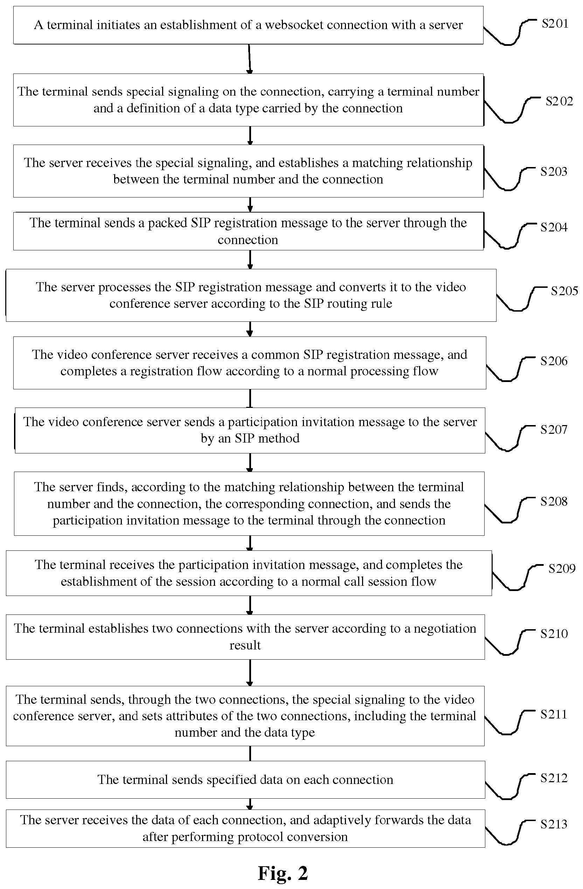

With reference to Fig. 2, the example case provides a port multiplexing method in a video conference system. The present embodiment includes four processes, that is, a connection between a terminal and a video conference server is established, the terminal is registered on the video conference server through the server, a session between the terminal and the video conference server is established, and the terminal transmits media stream data to the video conference server. The method of the example case specifically includes the following steps.

At S201, a terminal initiates an establishment of a websocket connection with a server.

At S202, the terminal sends special signaling on the connection, carrying a terminal number and a definition of a data type carried by the connection.

At S203, the server receives the special signaling, and establishes a matching relationship between the terminal number and the connection.

At S204, the terminal sends a packed SIP registration message to the server through the connection.

At S205, the server processes the SIP registration message and converts it to the video conference server according to the SIP routing rule.

At S206, the video conference server receives a common SIP registration message, and completes a registration flow according to a normal processing flow.

At S207, the video conference server sends a participation invitation message to the server by an SIP method.

At S208, the server finds, according to the matching relationship between the terminal number and the connection, the corresponding connection, and sends the participation invitation message to the terminal through the connection. The server needs to complete a protocol conversion of the participation invitation message according to the matching relationship between the terminal number and the connection.

At S209, the terminal receives the participation invitation message, and completes the establishment of the session according to a normal call session flow.

After participating in the conference, the terminal has completed each media capability negotiation, and is ready to send audio-video media (the present embodiment is illustrated by taking an audio and a video for example).

At S210, the terminal establishes two connections with the server according to a negotiation result.

At S211, the terminal sends, through the two connections, the special signaling to the video conference server, and sets attributes of the two connections, including the terminal number and the data type.

At S212, the terminal sends specified data on each connection.

At S213, the server receives the data of each connection, and adaptively forwards the data after performing protocol conversion.

By using the present embodiment, the transmission of signaling data and media stream data may be performed between the terminal and the server through a port, an effect of providing a multiplexing port outside by the video conference server is achieved, the complexity of deploying the video conference system is reduced, a deploying cost is reduced, and the problem of call signaling packet loss on the Internet is avoided, thereby improving the comprehensive competitiveness of product solutions.

### Embodiment two

With reference to Fig. 3, the present embodiment provides a server, which includes a receiving module 31, a processing module 32, and a sending module 33.

The receiving module 31 is configured to accept the first connection initiated by the terminal, receive the registration message sent by the terminal through the first connection, receive and convert the participation invitation message sent by the inviting party, herein the inviting party is one of the terminal or the video conference server corresponding to the terminal, accept at least one of other connections initiated by the terminal, and receive the various types of media streams sent by the terminal through at least one of other connections.

The processing module 32 is configured to convert the registration message sent by the terminal into the format which can be identified by the video conference server, convert the participation invitation message, and convert the various types of media streams sent by the terminal through at least one of other connections into the format which can be identified by the video conference server.

The sending module 33 is configured to send the converted registration message to the corresponding video conference server, so that the video conference server completes the registration of the terminal according to the registration message, send the converted participation invitation message to a responding party which is another of the terminal or the video conference server corresponding to the terminal, so that the responding party responds to the participation invitation message, and establishes a session with the inviting party, and send the converted various types of media streams to the video conference server.

In an embodiment, the sending module 33 and the receiving module 31 may be implemented by an antenna and a hardware module cooperating with the antenna. The processing module 32 may be implemented by an actual processor.

After a video conference is over, it is needed to tear down the connection and log out the session, so as to save resources of the server. The logout of the session may be either initiated by the terminal or implemented by server of the present embodiment. In order to implement the logout of the session by the server actively, the server of the present embodiment further includes a detecting module 34. The detecting module 34 is configured to determine, through the connection heartbeat check, whether the terminal needs to tear down the established connection. The processing module 32 is configured to tear down, when it is needed to tear down the established connection, the connection established with the terminal, and control the video conference server to log out the account of the terminal.

When the terminal actively initiates the logout, the receiving module 31 is further configured to receive the request for logging out the session sent by the terminal. The processing module 32 is configured to tear down the connection which has been established with the terminal according to the request for logging out the session, and control the video conference server to log out the session of the terminal.

In an embodiment, there are generally multiple terminals establishing multiple connections on the server, so not only the registration message sent through the first connection, the server may also receive the messages sent by other terminals through other connections. In order to make the data, which is sent by the terminal through the connection, correspond to the terminal correctly, information which may determine the corresponding relationship between the connection and the terminal is needed. The information is best written in corresponding sent information by the terminal during sending information through the connection. The information may be the identity information of the terminal, including, but not limited to, the terminal number, the IMEI number of the terminal, the IP address, and so on. For example, the terminal establishes three connections with the server, and may respectively write its own terminal number in the data sent on the three connections; after receiving the data, the server determines the terminal corresponding to each connection according to the terminal number carried in the data, saves the corresponding relationship, and when needed, uses the corresponding relationship to determine the terminal corresponding to the connection.

In an embodiment, if the corresponding relationship between the connection and the terminal is determined by means of writing the identity information of the terminal in the information transmitted through the connection, the server needs to parse the information to analyze the identity information of the terminal. Analyzing the identity information of the terminal from the complex information will undoubtedly increase the workload of analyzing the server and increase the load of the server, therefore, the terminal may preferably send special signaling to the server through the established connection after the server accepts the connection. The special signaling may be used for setting the identity information of the terminal corresponding to the connection for transmitting the special signaling.

The receiving module 31 of the present embodiment is further configured to receive, after the processing module 32 accepts each connection initiated by the terminal, the special signaling which is sent by the terminal through the connection. The special signaling is used for setting the identity information of the terminal corresponding to the connection for transmitting the special signaling.

In an embodiment, there are two manners of establishing the session between the terminal and the video conference server, one of which is the session establishing method in the uplink call process actively initiated by the video conference server, and the other is the session establishing method in the downlink call process actively initiated by the terminal.

In the first method, the receiving module 31 is configured to receive, through the first connection, the participation invitation message sent by the terminal.

The processing module 32 is configured to process the participation invitation message into the SIP message.

The sending module 33 is configured to forward the session initiation protocol message to the video conference server according to the corresponding routing rule, so that the video conference server gives a response, establishes the session, and completes the media capability negotiation between the terminal and the video conference server.

In the second method, the receiving module 31 is configured to receive the participation invitation message of the video conference server.

The processing module 32 is configured to determine, according to the identity information of the terminal corresponding to the first connection, the terminal receiving the participation invitation message.

The sending module 33 is configured to send the participation invitation message to the terminal determined by the processing module through the first connection, so that the terminal gives a response, establishes the session, and completes the media capability negotiation between the terminal and the video conference server.

The media capabilities include, but not limited to, the audio-video formats, the audio-video coding and decoding algorithms and the bandwidth parameters.

In order to reduce the process of unpacking to analyze the data before the server forwards the media stream data of the terminal, it is needed to determine the type of the media stream data transmitted through each connection. In view of this, the special signaling may be used to set the data type carried by each connection. Specifically, the data type carried by the connection for transmitting the special signaling may be written in the special signaling. For example, the data type is written in the special signaling transmitted through the first connection as the signaling data, and the data type is written in the special signaling corresponding to the connection for transmitting the audio media stream as the audio media stream data.

In an embodiment, the special signaling includes two fields defined outside the protocol standard header. The two fields are respectively used for describing the terminal number of the corresponding connection and the data type carried by the corresponding connection. For the structure of the special signaling, see the first embodiment.

In an embodiment, the server is the logical device, and may be set with the device of the video conference server or separately when the network construction or productization is applied actually. The present embodiment does not limit the specific form of the server.

In the above embodiments, a logical server, namely the server, may be added between the terminal and the video conference server, the shortcoming in the conventional art of only considering signaling port multiplexing based on a SIP video conference system is solved, an effect of providing a multiplexing port outside by the video conference server is achieved, the complexity of deploying the video conference system is reduced, the problem of firewall and NAT traversal on the site is solved, and the problem of call signaling packet loss on the Internet is avoided, thereby improving the comprehensive competitiveness of product solutions.

It is apparent that those skilled in the art should appreciate that the above modules and steps in the embodiments of the present invention may be implemented by a general-purpose computing device, and they may be centralized in a single computing device or distributed on a network composed of multiple computing devices; optionally, they may be implemented by a program code which is capable of being executed by the computing device, so that they may be stored in storage media (an ROM/RAM, a magnetic disk, and a compact disc) and executed by the computing device; and in some situations, the presented or described steps may be executed in an order different from that described here; or they are made into integrated circuit modules, respectively; or multiple modules and steps of them are made into a single integrated circuit module to realize. Therefore, the present invention is not limited to any particular combination of hardware and software.

The above contents are further elaborations of the present invention made with reference to the specific embodiments, but it should not be considered that the specific implementation of the present invention is limited to these elaborations. On the premise of not departing from the conception of the present invention, those ordinary skill in the art to which the present invention belongs may also make some simple deductions and replacements, as long as these simple deductions and replacements fall within the scope of protection of the present invention, which is solely defined by the appended claims.

### Industrial Applicability

The technical solutions provided by the embodiments of the present invention may be applied to the technical field of communications. In the technical solutions provided by the embodiments of the present invention, a first connection initiated by a terminal is accepted by servers provided at the terminal and a video conference server; a registration message sent by the terminal by means of the first connection is received, and the registration message is forwarded to the corresponding video conference server, so as to register the terminal on the video conference server. A participation invitation message sent by one of the terminal or the video conference server is then received and forwarded to the other party, so as to establish a session between the terminal and the video conference server. At least one connection initiated by the terminal is then accepted, and various types of media streams sent by the terminal through the at least one connection are received and converted and then forwarded to the video conference server, so as to implement a video conference. By means of the technical solutions provided by the embodiments of the present invention the present invention, an effect of providing a port to a terminal by a video conference server is achieved, the complexity of deploying a video conference system is reduced, some of security risks are reduced, and user experience is improved.

## Claims

1. A port multiplexing method for a video conference system, comprising:
accepting (S101) a first connection initiated by a terminal;
receiving (S102) a registration message sent by the terminal through the first connection, and after converting the registration message into a format which can be identified by a video conference server, sending it to the corresponding video conference server, so that the video conference server completes the registration of the terminal according to the registration message;
receiving and converting (S103) a participation invitation message sent by an inviting party, and sending the converted participation invitation message to a responding party, so that the responding party responds to the participation invitation message, and establishes a session with the inviting party; wherein the inviting party is the terminal or the video conference server, and the responding party is the video conference server or the terminal;
accepting (S104) and establishing at least one of other connections initiated by the terminal; and
receiving (S105) various types of media streams sent by the terminal through the established at least one of other connections, and after converting the various types of media streams into the format which can be identified by the video conference server, sending them to the video conference server.

2. The method as claimed in claim 1, further comprising:
determining, through a connection heartbeat check, whether the terminal needs to tear down the established at least one of other connections; if so, tearing down the at least one of other connections which has been established with the terminal, and controlling the video conference server to log out the session of the terminal; or
receiving a request for logging out a session sent by the terminal, and tearing down the at least one of other connections which has been established with the terminal, and controlling the video conference server to log out the session of the terminal.

3. The method as claimed in claim 1 or 2, further comprising after accepting the first connection or the at least one of other connections initiated by the terminal: receiving special signaling which is sent by the terminal through the accepted connection;
the special signaling is used for setting identity information of the terminal corresponding to the accepted connection used for transmitting the special signaling.

4. The method as claimed in claim 3, wherein receiving and converting the participation invitation message sent by the inviting party, and sending the converted participation invitation message to the responding party, so that the responding party responds to the participation invitation message, and establishes the session with the inviting party, wherein the inviting party is the terminal or the video conference server, and the responding party is the video conference server or the terminal, comprises:
receiving, through the first connection, the participation invitation message sent by the terminal; processing the participation invitation message into a Session Initiation Protocol -SIP- message, and forwarding it to the video conference server according to a corresponding routing rule, so that the video conference server gives a response, establishes the session with the terminal, and completes a media capability negotiation between the terminal and the video conference server; or
receiving the participation invitation message of the video conference server; according to the identity information of the terminal corresponding to the first connection, sending the participation invitation message to the terminal through the first connection, so that the terminal gives a response, establishes the session with the video conference server, and completes the media capability negotiation between the terminal and the video conference server.

5. The method as claimed in claim 3, wherein the special signaling defines, outside a protocol standard header, two fields; a first field for describing the identity information of the terminal corresponding to the connection used for transmitting the special signaling and a second filed for describing the data type carried.

6. A server, comprising:
a receiving module (31), which is configured to accept a first connection initiated by a terminal, receive a registration message sent by the terminal through the first connection, receive and convert a participation invitation message sent by an inviting party, wherein the inviting party is one of the terminal or a video conference server corresponding to the terminal, accept and establish at least one of other connections initiated by the terminal, and receive various types of media streams sent by the terminal through the established at least one of other connections;
a processing module (32), which is configured to convert the registration message sent by the terminal into a format which can be identified by the video conference server, convert the participation invitation message, and convert the various types of media streams sent by the terminal through the established at least one of other connections into the format which can be identified by the video conference server; and
a sending module (33), which is configured to send the converted registration message to the corresponding video conference server, so that the video conference server completes the registration of the terminal according to the registration message, send the converted participation invitation message to a responding party which is another of the terminal or the video conference server corresponding to the terminal, so that the responding party responds to the participation invitation message, and establishes a session with the inviting party, and send the converted various types of media streams to the video conference server.

7. The server as claimed in claim 6, further comprising: a detecting module (34); the detecting module (34) is configured to determine, through a connection heartbeat check, whether the terminal needs to tear down the established at least one of other connections; the processing module (32) is configured to tear down, when it is needed to tear down the established at least one of other connections which has been established with the terminal, and control the video conference server to log out the session of the terminal;
or, the receiving module (31) is further configured to receive a request for logging out the session sent by the terminal; the processing module (32) is configured to tear down the at least one of other connections which has been established with the terminal according to the request for logging out the session, and control the video conference server to log out the session of the terminal.

8. The server as claimed in claim 6 or 7, wherein the receiving module (31) is further configured to receive, after the processing module (32) accepts the first connection or the at least one of other connections initiated by the terminal, special signaling which is sent by the terminal through the accepted connection; the special signaling is used for setting identity information of the terminal corresponding to the accepted connection used for transmitting the special signaling.

9. The server as claimed in claim 8, wherein the receiving module (31) is configured to receive the participation invitation message sent by the terminal through the first connection;
the processing module (32) is configured to process the participation invitation message into a Session Initiation Protocol -SIP- message; the sending module (33) is configured to forward the SIP protocol message to the video conference server according to a corresponding routing rule, so that the video conference server gives a response, establishes the session with the terminal, and completes a media capability negotiation between the terminal and the video conference server;
or, the receiving module (31) is configured to receive the participation invitation message of the video conference server; the processing module (32) is configured to determine, according to the identity information of the terminal corresponding to the first connection, the terminal receiving the participation invitation message; the sending module (33) is configured to send, through the first connection, the participation invitation message to the terminal determined by the processing module (32), so that the terminal gives a response, establishes the session with the video conference server, and completes the media capability negotiation between the terminal and the video conference server.

10. The server as claimed in claim 8, wherein the special signaling defines, outside a protocol standard header, two fields; a first field for describing the identity information of the terminal corresponding to the connection used for transmitting the special signaling and a second field for describing the data type carried.

11. A computer storage medium, in which one or more programs that a computer may execute are stored and when executed by the computer, the one or more programs make the computer perform a method as claimed in any one of claims 1 to 5.

## Patentansprüche

1. Port-Multiplexing-Verfahren für ein Videokonferenzsystem, das Folgendes umfasst:
Annehmen (S101) einer ersten, von einem Endgerät initiierten Verbindung;
Empfangen (S102) einer Registrierungsnachricht, die von dem Endgerät über die erste Verbindung gesendet wurde, und nach dem Umwandeln der Registrierungsnachricht in ein Format, das von einem Videokonferenzserver identifiziert werden kann, Senden der Nachricht an den entsprechenden Videokonferenzserver, so dass der Videokonferenzserver die Registrierung des Endgeräts gemäß der Registrierungsnachricht abschließt;
Empfangen und Konvertieren (S103) einer Teilnahmeeinladungsnachricht, die von einer einladenden Partei gesendet wird, und Senden der konvertierten Teilnahmeeinladungsnachricht an eine antwortende Partei, so dass die antwortende Partei auf die Teilnahmeeinladungsnachricht antwortet und eine Sitzung mit der einladenden Partei aufbaut; wobei die einladende Partei das Endgerät oder der Videokonferenzserver ist und die antwortende Partei der Videokonferenzserver oder das Endgerät ist;
Annehmen (S104) und Herstellen mindestens einer der anderen vom Endgerät initiierten Verbindungen; und
Empfangen (S105) verschiedener Arten von Medienströmen, die von dem Endgerät über die hergestellte mindestens eine der anderen Verbindungen gesendet werden, und nach dem Umwandeln der verschiedenen Arten von Medienströmen in das Format, das von dem Videokonferenzserver identifiziert werden kann, Senden derselben an den Videokonferenzserver.

2. Verfahren nach Anspruch 1, ferner Folgendes umfassend:
Bestimmen, durch eine Verbindungs-Heartbeat-Prüfung, ob das Endgerät die aufgebaute mindestens eine der anderen Verbindungen abbauen muss;
wenn ja, die mindestens eine der anderen Verbindungen, die mit dem Endgerät aufgebaut wurde, abzubauen und den Videokonferenzserver zu steuern, um die Sitzung des Endgeräts abzumelden; oder
Empfangen einer vom Endgerät gesendeten Anforderung zum Abmelden einer Sitzung und Abbauen der mindestens einen der anderen Verbindungen, die mit dem Endgerät aufgebaut wurde, und Steuern des Videokonferenzservers zum Abmelden der Sitzung des Endgeräts.

3. Verfahren nach Anspruch 1 oder 2, ferner nach dem Akzeptieren der ersten Verbindung oder der mindestens einen der anderen vom Endgerät initiierten Verbindungen Folgendes umfassend: Empfangen einer speziellen Signalisierung, die vom Endgerät über die akzeptierte Verbindung gesendet wird;
die spezielle Signalisierung wird zum Setzen von Identitätsinformationen des Endgerätes verwendet, das der akzeptierten Verbindung entspricht, die für die Übertragung der speziellen Signalisierung verwendet wird.

4. Verfahren nach Anspruch 3, wobei das Empfangen und Umwandeln der von der einladenden Partei gesendeten Teilnahmeeinladungsnachricht und das Senden der umgewandelten Teilnahmeeinladungsnachricht an die antwortende Partei, sodass die antwortende Partei auf die Teilnahmeeinladungsnachricht antwortet und die Sitzung mit der einladenden Partei aufbaut, wobei die einladende Partei das Endgerät oder der Videokonferenzserver ist und die antwortende Partei der Videokonferenzserver oder das Endgerät ist, Folgendes umfasst:
Empfangen der vom Endgerät gesendeten Teilnahmeeinladungsnachricht über die erste Verbindung; Verarbeiten der Teilnahmeeinladungsnachricht in eine Session Initiation Protocol -SIP-Nachricht und Weiterleiten derselben an den Videokonferenzserver gemäß einer entsprechenden Routingregel, sodass der Videokonferenzserver eine Antwort gibt, die Sitzung mit dem Endgerät aufbaut und eine Medienfähigkeitsaushandlung zwischen dem Endgerät und dem Videokonferenzserver abschließt; oder
Empfangen der Teilnahmeeinladungsnachricht des Videokonferenzservers; Senden der Teilnahmeeinladungsnachricht an das Endgerät über die erste Verbindung gemäß der Identitätsinformation des Terminals, die der ersten Verbindung entspricht, so dass das Endgerät eine Antwort gibt, die Sitzung mit dem Videokonferenzserver aufbaut und die Medienfähigkeitsaushandlung zwischen dem Endgerät und dem Videokonferenzserver abschließt.

5. Verfahren nach Anspruch 3, wobei die spezielle Signalisierung außerhalb eines Protokollstandard-Headers zwei Felder definiert; ein erstes Feld zur Beschreibung der Identitätsinformation des Endgerätes, das der zur Übertragung der speziellen Signalisierung verwendeten Verbindung entspricht, und ein zweites Feld zur Beschreibung des übertragenen Datentyps.

6. Server, umfassend:
ein Empfangsmodul (31), das so konfiguriert ist, dass es eine erste von einem Endgerät initiierte Verbindung annimmt, eine von dem Endgerät über die erste Verbindung gesendete Registrierungsnachricht empfängt, eine von einer einladenden Partei gesendete Teilnahmeeinladungsnachricht empfängt und umwandelt, wobei die einladende Partei entweder das Endgerät oder ein dem Endgerät entsprechender Videokonferenzserver ist, mindestens eine von dem Endgerät initiierte andere Verbindung annimmt und aufbaut, und verschiedene Arten von Medienströmen empfängt, die von dem Endgerät über die aufgebaute mindestens eine der anderen Verbindungen gesendet werden;
ein Verarbeitungsmodul (32), das so konfiguriert ist, dass es die von dem Endgerät gesendete Registrierungsnachricht in ein Format umwandelt, das von dem Videokonferenzserver identifiziert werden kann, die Teilnahmeeinladungsnachricht umwandelt und die verschiedenen Arten von Medienströmen, die von dem Endgerät über die hergestellte mindestens eine der anderen Verbindungen gesendet werden, in das Format umwandelt, das von dem Videokonferenzserver identifiziert werden kann; und
ein Sendemodul (33), das so konfiguriert ist, dass es die umgewandelte Registrierungsnachricht an den entsprechenden Videokonferenzserver sendet, sodass der Videokonferenzserver die Registrierung des Endgeräts gemäß der Registrierungsnachricht abschließt, die umgewandelte Teilnahmeeinladungsnachricht an eine antwortende Partei sendet, die eine andere als das Endgerät oder der dem Endgerät entsprechende Videokonferenzserver ist, sodass die antwortende Partei auf die Teilnahmeeinladungsnachricht antwortet und eine Sitzung mit der einladenden Partei aufbaut, und die umgewandelten verschiedenen Arten von Medienströmen an den Videokonferenzserver sendet.

7. Server nach Anspruch 6, ferner umfassend: ein Erfassungsmodul (34); das Erfassungsmodul (34) ist so konfiguriert, dass es durch eine Verbindungs-Heartbeat-Prüfung feststellt, ob das Endgerät die aufgebaute mindestens eine der anderen Verbindungen abbauen muss; das Verarbeitungsmodul (32) ist so konfiguriert, dass es die aufgebaute mindestens eine der anderen Verbindungen, die mit dem Endgerät aufgebaut wurde, abbaut, wenn dies erforderlich ist, und den Videokonferenzserver so steuert, dass er die Sitzung des Endgeräts abmeldet;
oder das Empfangsmodul (31) ist ferner so konfiguriert, dass es eine von dem Endgerät gesendete Anforderung zum Abmelden der Sitzung empfängt; das Verarbeitungsmodul (32) ist so konfiguriert, dass es die mindestens eine der anderen Verbindungen, die mit dem Endgerät aufgebaut wurde, entsprechend der Anforderung zum Abmelden der Sitzung abbaut und den Videokonferenzserver so steuert, dass er die Sitzung des Endgeräts abmeldet.

8. Server nach Anspruch 6 oder 7, wobei das Empfangsmodul (31) ferner so konfiguriert ist, dass es, nachdem das Verarbeitungsmodul (32) die erste Verbindung oder die mindestens eine der anderen vom Endgerät initiierten Verbindungen akzeptiert hat, eine spezielle Signalisierung empfängt, die vom Endgerät über die akzeptierte Verbindung gesendet wird; die spezielle Signalisierung wird zum Einstellen von Identitätsinformationen des Endgeräts verwendet, die der akzeptierten Verbindung entsprechen, die zum Übertragen der speziellen Signalisierung verwendet wird.

9. Server nach Anspruch 8, wobei das Empfangsmodul (31) so konfiguriert ist, dass es die vom Terminal über die erste Verbindung gesendete Teilnahmeeinladungsnachricht empfängt;
das Verarbeitungsmodul (32) so konfiguriert ist, dass es die Teilnahmeeinladungsnachricht in eine Session Initiation Protocol -SIP-Nachricht verarbeitet; das Sendemodul (33) so konfiguriert ist, dass es die SIP-Protokollnachricht gemäß einer entsprechenden Routingregel an den Videokonferenzserver weiterleitet, sodass der Videokonferenzserver eine Antwort gibt, die Sitzung mit dem Endgerät aufbaut und eine Medienfähigkeitsaushandlung zwischen dem Endgerät und dem Videokonferenzserver abschließt;
oder das Empfangsmodul(31) so konfiguriert ist, dass es die Teilnahmeeinladungsnachricht des Videokonferenzservers empfängt; das Verarbeitungsmodul (32) so konfiguriert ist, dass es gemäß der Identitätsinformation des Endgeräts, das der ersten Verbindung entspricht, das Endgerät bestimmt, das die Teilnahmeeinladungsnachricht empfängt; das Sendemodul (33) so konfiguriert ist, dass es über die erste Verbindung die Teilnahmeeinladungsnachricht an das von dem Verarbeitungsmodul (32) bestimmte Endgerät sendet, sodass das Endgerät eine Antwort gibt, die Sitzung mit dem Videokonferenzserver aufbaut und die Medienfähigkeitsaushandlung zwischen dem Endgerät und dem Videokonferenzserver abschließt.

10. Server nach Anspruch 8, wobei die spezielle Signalisierung außerhalb eines Protokollstandard-Headers zwei Felder definiert; ein erstes Feld zur Beschreibung der Identitätsinformation des Endgerätes, das der zur Übertragung der speziellen Signalisierung verwendeten Verbindung entspricht, und ein zweites Feld zur Beschreibung des übertragenen Datentyps.

11. Computerspeichermedium, in dem ein oder mehrere Programme, die ein Computer ausführen kann, gespeichert sind, und wenn sie von dem Computer ausgeführt werden, veranlassen das eine oder die mehreren Programme den Computer, ein Verfahren nach einem der Ansprüche 1 bis 5 durchzuführen.

## Revendications

1. Procédé de multiplexage de port pour un système de vidéoconférence, comprenant :
accepter (S101) une première connexion initiée par un terminal ;
recevoir (S102) un message d'enregistrement envoyé par le terminal à travers la première connexion, et après avoir converti le message d'enregistrement en un format qui peut être identifié par un serveur de vidéoconférence, l'envoyer au serveur de vidéoconférence correspondant, de manière que le serveur de vidéoconférence complète l'enregistrement du terminal selon le message d'enregistrement ;
recevoir et convertir (S103) un message d'invitation à participer envoyé par une partie invitante, et envoyer le message d'invitation à participer converti à une partie répondante, de manière que la partie répondante réponde au message d'invitation à participer, et établisse une session avec la partie invitante ; dans lequel la partie invitante est le terminal ou le serveur de vidéoconférence, et la partie répondante est le serveur de vidéoconférence ou le terminal ;
accepter (S104) et établir au moins une d'autres connexions initiées par le terminal ; et
recevoir (S105) différents types de flux de média envoyés par le terminal à travers l'au moins une d'autres connexions établie, et après avoir converti les différents types de flux de média en un format qui peut être identifié par le serveur de vidéoconférence, les envoyer au serveur de vidéoconférence.

2. Procédé selon la revendication 1, comprenant en outre :
déterminer, à travers une vérification de heartbeat de connexion, si le terminal a besoin de couper l'au moins une d'autres connexions établie ;
si tel est le cas, couper l'au moins une d'autres connexions qui a été établie avec le terminal, et contrôler le serveur de vidéoconférence pour déconnecter la session du terminal ; ou
recevoir une demande de déconnexion d'une session envoyée par le terminal, et couper l'au moins une d'autres connexions qui a été établie avec le terminal, et contrôler le serveur de vidéoconférence pour déconnecter la session du terminal.

3. Procédé selon la revendication 1 ou 2, comprenant en outre après avoir accepté la première connexion ou l'au moins une parmi d'autres connexions initiées par le terminal : recevoir une signalisation spéciale qui est envoyée par le terminal à travers la connexion acceptée ;
la signalisation spéciale est utilisée pour définir des informations d'identité du terminal correspondant à la connexion acceptée utilisée pour transmettre la signalisation spéciale.

4. Procédé selon la revendication 3, dans lequel recevoir et convertir le message d'invitation à participer envoyé par la partie invitante, et envoyer le message d'invitation à participer converti à la partie répondante, de manière que la partie répondante réponde au message d'invitation à participer, et établisse la session avec la partie invitante, dans lequel la partie invitante est le terminal ou le serveur de vidéoconférence, et la partie répondante est le serveur de vidéoconférence ou le terminal, comprend :
recevoir, à travers la première connexion, le message d'invitation à participer envoyé par le terminal ;
traiter le message d'invitation à participer en un message de protocole d'initiation de session (SIP), et le transmettre au serveur de vidéoconférence selon une règle de routage correspondante, de manière que le serveur de vidéoconférence donne une réponse, établisse la session avec le terminal, et complète une négociation de capacité de média entre le terminal et le serveur de vidéoconférence ; ou
recevoir le message d'invitation à participer du serveur de vidéoconférence ; selon les informations d'identité du terminal correspondant à la première connexion, envoyer le message d'invitation à participer au terminal à travers la première connexion, de manière que le terminal donne une réponse, établisse la session avec le serveur de vidéoconférence, et complète la négociation de capacité de média entre le terminal et le serveur de vidéoconférence.

5. Procédé selon la revendication 3, dans lequel la signalisation spéciale définit, en dehors d'un en-tête de norme de protocole, deux champs ; un premier champ pour décrire les informations d'identité du terminal correspondant à la connexion utilisée pour transmettre la signalisation spéciale et un deuxième champ pour décrire le type de données transportées.

6. Serveur, comprenant :
un module de réception (31), qui est configuré pour accepter une première connexion initiée par un terminal, recevoir un message d'enregistrement envoyé par le terminal à travers la première connexion, recevoir et convertir un message d'invitation à participer envoyé par une partie invitante, dans lequel la partie invitante est l'un du terminal ou un serveur de vidéoconférence correspondant au terminal, accepter et établir au moins une d'autres connexions initiées par le terminal, et recevoir différents types de flux de média envoyés par le terminal à travers l'au moins une d'autres connexions établie ;
un module de traitement (32), qui est configuré pour convertir le message d'enregistrement envoyé par le terminal en un format qui peut être identifié par le serveur de vidéoconférence, convertir le message d'invitation à participer, et convertir les différents types de flux de média envoyés par le terminal à travers l'au moins une d'autres connexions établie en un format qui peut être identifié par le serveur de vidéoconférence ; et
un module d'envoi (33), qui est configuré pour envoyer le message d'enregistrement converti au serveur de vidéoconférence correspondant, de manière que le serveur de vidéoconférence complète l'enregistrement du terminal selon le message d'enregistrement, envoie le message d'invitation à participer converti à une partie répondante qui est un autre du terminal ou du serveur de vidéoconférence correspondant au terminal, de manière que la partie répondante réponde au message d'invitation à participer, et établisse une session avec la partie invitante, et envoie les différents types de flux de média convertis au serveur de vidéoconférence.

7. Serveur selon la revendication 6, comprenant en outre : un module de détection (34) ; le module de détection (34) est configuré pour déterminer, à travers une vérification de heartbeat de connexion, si le terminal a besoin de couper l'au moins une d'autres connexions établie ; le module de traitement (32) est configuré pour couper, lorsqu'il est nécessaire de couper l'au moins une d'autres connexions établie qui a été établie avec le terminal, et contrôler le serveur de vidéoconférence pour déconnecter la session du terminal ;
ou, le module de réception (31) est en outre configuré pour recevoir une demande de déconnexion de la session envoyée par le terminal ; le module de traitement (32) est configuré pour couper l'au moins une d'autres connexions qui a été établie avec le terminal selon la demande de déconnexion de la session, et contrôler le serveur de vidéoconférence pour déconnecter la session du terminal.

8. Serveur selon la revendication 6 ou 7, dans lequel le module de réception (31) est en outre configuré pour recevoir, après que le module de traitement (32) a accepté la première connexion ou l'au moins une d'autres connexions initiées par le terminal, une signalisation spéciale qui est envoyée par le terminal à travers la connexion acceptée ; la signalisation spéciale est utilisée pour définir des informations d'identité du terminal correspondant à la connexion acceptée utilisée pour transmettre la signalisation spéciale.

9. Serveur selon la revendication 8, dans lequel le module de réception (31) est configuré pour recevoir le message d'invitation à participer envoyé par le terminal à travers la première connexion ;
le module de traitement (32) est configuré pour traiter le message d'invitation à participer en un message de protocole d'initiation de session (SIP) ; le module d'envoi (33) est configuré pour transmettre le message de protocole SIP au serveur de vidéoconférence selon une règle de routage correspondante, de manière que le serveur de vidéoconférence donne une réponse, établisse la session avec le terminal, et complète une négociation de capacité de média entre le terminal et le serveur de vidéoconférence ;
ou, le module de réception (31) est configuré pour recevoir le message d'invitation à participer du serveur de vidéoconférence ; le module de traitement (32) est configuré pour déterminer, selon les informations d'identité du terminal correspondant à la première connexion, le terminal recevant le message d'invitation à participer ; le module d'envoi (33) est configuré pour envoyer, à travers la première connexion, le message d'invitation à participer au terminal déterminé par le module de traitement (32), de manière que le terminal donne une réponse, établisse la session avec le serveur de vidéoconférence, et complète la négociation de capacité de média entre le terminal et le serveur de vidéoconférence.

10. Serveur selon la revendication 8, dans lequel la signalisation spéciale définit, en dehors d'un en-tête de norme de protocole, deux champs ; un premier champ pour décrire les informations d'identité du terminal correspondant à la connexion utilisée pour transmettre la signalisation spéciale et un deuxième champ pour décrire le type de données transportées.

11. Support de stockage pour ordinateur, sur lequel un ou plusieurs programmes qui peuvent être exécutés par un ordinateur sont stockée et lorsqu'ils sont exécutés par l'ordinateur, l'un ou plusieurs programmes amènent l'ordinateur à réaliser un procédé selon l'une quelconque des revendication 1 à 5.
